# EUROPÄISCHE PATENTSCHRIFT

(11) **EP 1 800 724 B1**
(45) Veröffentlichungstag und Bekanntmachung des Hinweises auf die Patenterteilung: **19.06.2019**
(21) Anmeldenummer: 06124662.5
(22) Anmeldetag: 23.11.2006
(51) Int. Cl.: B01D 3/06, B01D 19/00

(54) **Verfahren zur statische Entgasung einer Polymere enthaltende Flüssigkeit**
Process for static degassing a liquid containing polymers
Procédé de dégazage statique d'un liquide contenant des polymères

(30) Priorität: 21.12.2005 EP 05405711
(43) Veröffentlichungstag der Anmeldung: 27.06.2007
(73) Patentinhaber: Sulzer Chemtech AG, 8401 Winterthur (CH)
(72) Erfinder: Streiff, Felix A., 8457, Humlikon (CH)
(74) Vertreter: Henkel, Breuer & Partner

(56) Entgegenhaltungen:
- EP-A- 0 369 708
- WO-A-97/49473
- WO-A-2004/018522
- CA-A1- 1 251 403
- DE-A1- 2 331 314
- US-A- 2 564 584
- US-B1- 6 224 716
- US-B1- 6 436 242

## Beschreibung

Die Erfindung betrifft einen statischen Entgasungsapparat für eine Polymere enthaltende Flüssigkeit, zwecks Polymerentgasung, nämlich zwecks Separierung flüchtiger Komponenten von den Polymeren, sowie ein Verfahren zum Durchführen dieser Polymerentgasung. Die zu behandelnde Flüssigkeit ist beispielsweise eine Polymerlösung, in der ein Lösungsmittel die flüchtige Komponente bildet, oder eine Polymerschmelze mit Monomeren als flüchtige Komponenten.

Die Polymerentgasung (engl. "polymer devolatilization") ist bei der Herstellung, insbesondere Aufbereitung von Kunststoffen ein wichtiges Teilverfahren, das in vielen Fällen kritisch und daher aufwändig ist. Es steht eine Vielzahl von Entgasungsverfahren ("devolatilization processes") zur Verfügung, aus denen in Bezug auf die zu behandelnde Flüssigkeit ein geeignetes Verfahren oder eine Kombination solcher Verfahren ausgewählt werden kann. Die Wahl kann dabei empirisch aufgrund von Erfahrung und gestützt auf Versuche getroffen werden. Häufig werden maschinelle Vorrichtungen, beispielsweise Extruder oder andere mit rotierenden Bauteilen arbeitende Entgasungsvorrichtungen verwendet. Es kommen aber auch apparative Vorrichtungen, nämlich statische Entgasungsapparate zum Einsatz, bei denen nur Pumpen (Austragspumpen für entgastes Polymer, Pumpen für Wärmeträgermedien) maschinelle Komponenten bilden.

Aufgabe der Erfindung ist es, einen weiteren statischen Entgasungsapparat zu schaffen, der sich für die Entgasung einer Polymere enthaltenden Flüssigkeit eignet, wobei diese Flüssigkeit bei einer Entspannung aufschäumt und dabei ein Gemisch aus frei gesetztem Gas und gasarmem Polymer entstehen lässt. (Dabei ist ein Dampf auch als ein Gas zu verstehen und das gasarme Polymer als eine Flüssigkeit, die einen Rest an flüchtigen Komponenten einerseits in gelöster Form enthält und andererseits in Form von feinen Bläschen, deren Durchmesser über einen relativ breiten Wertebereich verteilt sind.) Die der Erfindung zugrunde liegende Aufgabe wird durch das im Anspruch 1 definiertes Entgasungsverfahren und durch den im Anspruch 9 definierten Entgasungsapparat gelöst.

Der statische Entgasungsapparat dient dazu, eine Polymere enthaltende Flüssigkeit zwecks Polymerentgasung zu behandeln. Es werden dabei flüchtige Komponenten von den Polymeren separiert, indem die unter Druck stehende Flüssigkeit in einem Behälter entspannt wird. Am Boden eines Sumpfbereichs befindet sich eine Austragspumpe für das entgaste Polymer.

In oberen Bereichen des Behälters ist eine Absaugleitung für aus den flüchtigen Komponenten gebildeten Gasen angeschlossen sowie mindestens eine Phasentrennkammer angeordnet. Diese Kammer umfasst einen Zulauf für die zu behandelnde Flüssigkeit, untere Öffnungen eines Polymeraustrittsbereichs und eine einzige oder eine Mehrzahl von oberen Öffnungen eines Gasaustrittsbereichs.

Nachfolgend wird die Erfindung anhand der Zeichnungen erläutert. Es zeigen:
- Fig. 1: eine erste Ausführungsform des erfindungsgemässen Entgasungsapparats,
- Fig. 2: den Kopfbereich eines zweiten erfindungsgemässen Entgasungsapparats,
- Fig. 3: ein Detail zum Entgasungsapparat der Fig. 2,
- Fig. 4: eine Draufsicht auf eine Phasentrennkammer, die im Entgasungsapparat der Fig. 2 eingesetzt ist,
- Fig. 5: eine weitere Phasentrennkammer und
- Fig. 6: eine Variante zum Entgasungsapparat der Fig. 2.

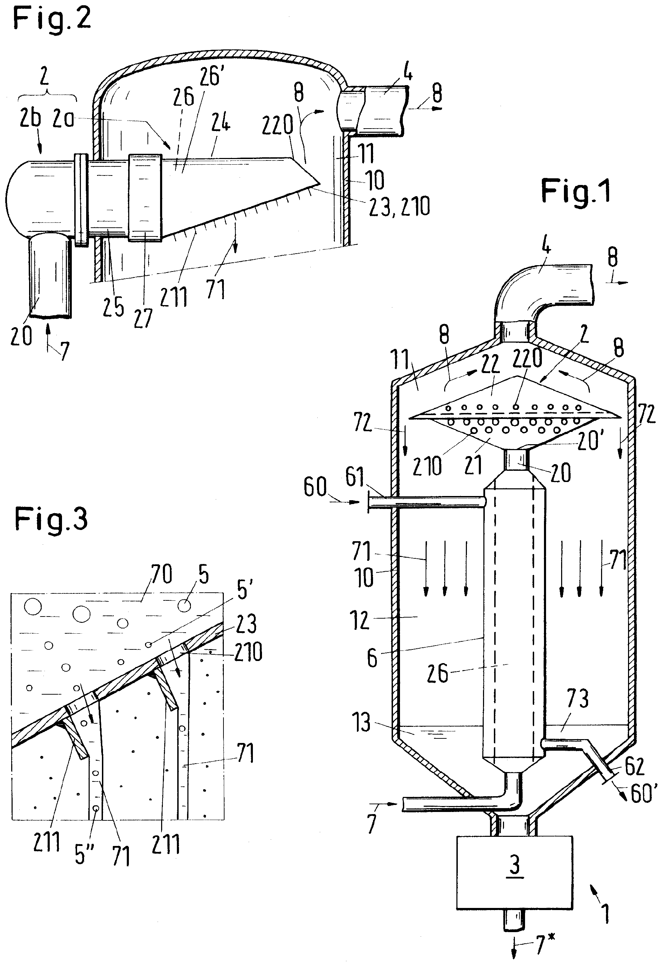

Mit einem statischen Entgasungsapparat 1 gemäss der Erfindung, wie er als erste Ausführungsform in Fig. 1 dargestellt ist, wird beispielsweise eine hochviskose, Polymere enthaltende Flüssigkeit 7 behandelt. Diese Behandlung ist eine Polymerentgasung, bei der flüchtige Komponenten von den Polymeren separiert werden; sie wird mittels einer Entspannungsverdampfung durchgeführt. Wie bei bereits bekannten Verfahren können die aus den flüchtigen Komponenten gebildeten Gasen teilweise aus fallenden Filmen und/oder Strängen in einem Behälter 10, der in der Regel evakuierbar ist, frei gesetzt werden. Der Innenraum des Behälters 10 umfasst einen Kopfbereich 11, einen Mittenbereich 12 und einen Sumpfbereich 13, in dem entgastes oder teilweise entgastes Polymer 73 angesammelt wird. Unter Verwendung einer nicht dargestellten Einrichtung zur geregelten Niveauhaltung des Polymers 73 im Sumpfbereich 13 wird an dessen Boden mittels einer Austragspumpe 3 entgastes Polymer 7* aus dem Behälter 10 abgezogen. Das entgaste Polymer 7* kann noch Reste an flüchtigen Komponenten enthalten, die sich - falls erforderlich - in einer weiteren Entgasungseinrichtung (nicht dargestellt) entfernen lassen. Am Behälter 10 ist eine Absaugleitung 4 für die frei gesetzten Gase angeschlossen.

Im Kopfbereich 11 ist eine Phasentrennkammer 2 in den Behälter 10 integriert. Es können auch mehrere Phasentrennkammern 2 im Behälter 10 integriert sein. Die Kammer 2 umfasst eine Zulaufsmündung 20' für die zu behandelnde Flüssigkeit, einen Polymeraustrittsbereich mit unteren Öffnungen 210 und einen Gasaustrittsbereich mit oberen Öffnungen 220. Die gesamte Querschnittsfläche der oberen Öffnungen 220 verglichen mit der gesamten Querschnittsfläche der unteren Öffnungen 210 kann wesentlich kleiner sein und beträgt mit Vorteil mindestens 5%.

In der Phasentrennkammer 2 erfolgt aufgrund einer Schaumbildung eine Entgasung. Zur Entwicklung des Schaums ist eine mittlere Verweilzeit in der Phasentrennkammer 2 von mindestens einer, vorzugsweise zwei Minuten vorzusehen, wobei diese mittlere Verweilzeit gleich dem Quotienten aus der in der Phasentrennkammer 2 enthaltenden Flüssigkeitsmenge und dem Durchsatz ist und die Kammer eine maximale Füllung aufweist. Eine gasreiche Fraktion, nämlich ein Schaum mit Blasen oder grossen Bläschen tritt durch obere Öffnungen 220 (Gasaustrittsbereich) aus der Phasentrennkammer 2 aus, wobei die Bläschen aufplatzen, so dass deren aus flüchtigen Komponenten bestehender Inhalt frei gesetzt wird. Je grösser der Abstand zwischen der Zulaufsmündung 20' und dem Gasaustrittsbereich ist und je grösser die mittlere Verweilzeit ist, desto länger ist die Dauer, während welcher der Gasanteil der gasreichen Fraktion zunehmen kann. Die flüchtigen Komponenten werden als Gasstrom 8 (Pfeile 8) durch die Absaugleitung 4 aus dem Behälter 10 entfernt. Die Wandung der Phasentrennkammer 2 ist bei der besonderen Ausführungsform der Fig. 1 aus zwei schirmförmigen Teilen, einem unteren Teil 21 und einem oberen Teil 22, zusammengesetzt. Unter dem konvexen Zentralbereich des oberen schirmförmigen Teils 22 kann sich eine stationäre Gasblase ausbilden, wobei die Gasblase auch ein Schaum mit sehr geringem Flüssigkeitsanteil sein kann.

Eine gasarme Fraktion, die einen Rest an flüchtigen Komponenten in gelöster Form und in Form von feinen Bläschen enthält, tritt durch untere Öffnungen 210 aus der Phasentrennkammer 2 aus. Wie aus dem Buch "Polymer Devolatilization" (edited by Ramon J. Albalak; Marcel Dekker, Inc.; 1996) bekannt ist, zeigen geschäumte Kunststoffe eine Struktur mit einer selbstähnlichen, fraktalartigen Geometrie der Durchmesser und Verteilung der Bläschen (Albalak et al. "Study of Devolatilization by SEM", Fig. 9). Es sind die Bläschendurchmesser also über einen relativ breiten Wertebereich verteilt. (In dem genannten Buch sind weitere wichtige Erkenntnisse zur Polymerentgasung beschrieben sowie Entgasungsvorrichtungen.)

Der Gasaustrittsbereich (Öffnungen 220) und der Polymeraustrittsbereich (Öffnungen 210) sind in Randbereichen der schirmförmigen Teile 21 bzw. 22 angeordnet. Polymer 72 (Pfeile 72), das zusammen mit dem Gasstrom 8 aus dem Gasaustrittsbereich austritt, fliesst nach unten weg.

Für eine weitere Entgasung sind die unteren Öffnungen 210 loch- oder schlitzförmig ausgebildet. Die gasarme Fraktion fliesst aufgeteilt auf strangförmige (bzw. filmförmige) Teilströme 71 aus dem Polymeraustrittsbereich aus. Die Teilströme 71 bewegen sich direkt fallend oder durch Einbauten verzögert (nicht dargestellt) in den Sumpfbereich 13 und setzen dabei flüchtige Komponenten in den Mittenbereich 12 frei. Das dabei frei gesetzte Gas wird über die Absaugleitung 4 abgeführt.

Es bestehen Druckunterschiede zwischen dem Innenraum der Phasentrennkammer 2 und dem Mittenbereich 12 des Behälters 10. Wird die Entgasung bei einem tiefen Druck betrieben (erzeugt durch Vakuumpumpe), so soll der maximale Druckunterschied bei den tiefst liegenden Öffnungen 210 höchstens 100 mbar betragen. Bei hohem Entgasungsdruck kann der maximale Druckunterschied auch höher, beispielsweise 500 mbar betragen. Die Druckunterschiede treiben einerseits die beiden Fraktionen durch die Öffnungen 210 bzw. 220 und lassen andererseits die Blasen weiter expandieren, so dass diese aufplatzen. Die Teilströme 71 der gasarmen Fraktion sollen einen Durchsatz von höchstens 15 kg/h aufweisen. Bei grösseren Durchsätzen wäre der Gasanteil der gasarmen Fraktion unerwünscht hoch. In einer industriellen Anlage hat der gesamte Durchsatz durch den Polymeraustrittsbereich in der Regel einen Wert in der Grössenordnung von 1 bis 10 kg/s.

Der Zulauf 20 zur Phasentrennkammer 2 ist bei der ersten Ausführungsform innerhalb des Behälters 10 angeordnet. Er ist teilweise als Wärmetauscher 6 ausgebildet (Wärmeträgermedium 60 bzw. 60', Vorlauf 61, Nachlauf 62). Mit Vorteil sind Einbauten in Form von statischen Mischerelementen oder Wärmeleitrippen im Zulauf 20, d.h. in einem Abschnitt 26 des Zulaufs 20, der sich im Wärmetauscher 6 befindet, angeordnet. Die Einbauten tragen zu einem Wärmetransport aus dem Wärmeträgermedium 60 in die zu behandelnde Flüssigkeit bei. Der Wärmetauscher 6 kann auch Wärme an den Mittenraum 12 abgeben; eine Wärmedämmung ist somit nicht erforderlich.

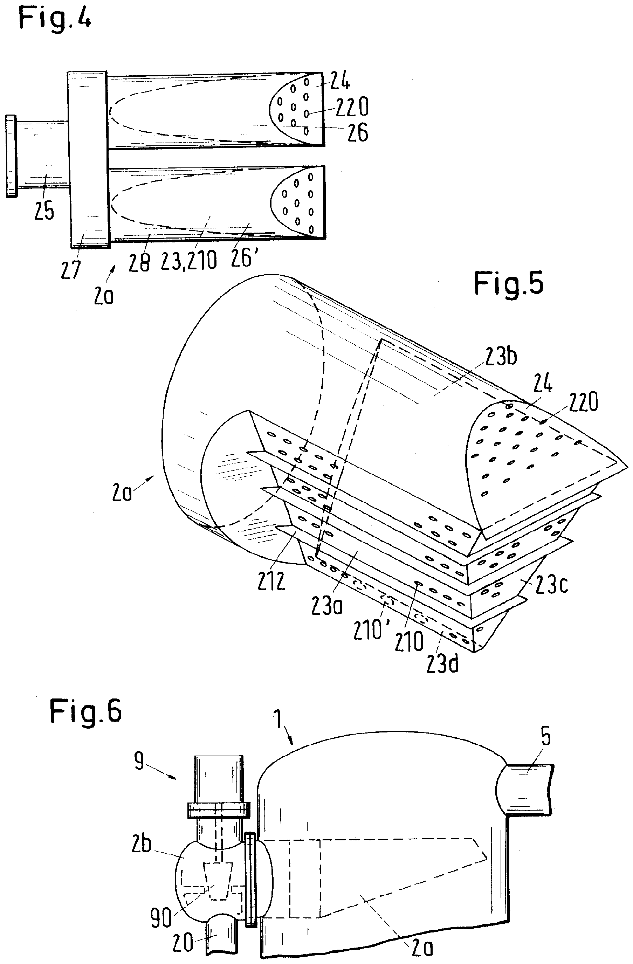

Fig. 2 zeigt den Kopfbereich 11 eines zweiten erfindungsgemässen Entgasungsapparats 1, bei dem sich der Zulauf 20 zur Phasentrennkammer 2 ausserhalb des Behälters 10 befindet. Die Phasentrennkammer 2 umfasst einen im Behälter angeordneten Teil 2a und einen ausserhalb angeordneten Teil 2b. Auch hier führt der Zulauf 20 mit Vorteil durch einen Wärmetauscher (nicht dargestellt), der ähnlich wie der Wärmetauscher 6 ausgebildet sein kann (jedoch mit einem wärmedämmenden Mantel). Der innere Kammerteil 2a ist zweiarmig ausgebildet, wie eine in Fig. 4 dargestellte Draufsicht zeigt. Zwei Arme 26 und 26' sind über ein Verteilstück 27 an ein eingangsseitiges Rohrstück 25 angeschlossen. Die Wandungen der Arme 26, 26' sind jeweils aus zwei Lochplatten 23 sowie 24 und einem Rohrteil 28 zusammengesetzt. Die Lochplatte 23 bildet den Polymeraustrittsbereich mit den unteren Kammeröffnungen 210, die Lochplatte 24 den Gasaustrittsbereich mit den oberen Kammeröffnungen 220. Der Gasaustrittsbereich kann anstelle der Lochplatte 24 auch nur aus einer Öffnung bestehen, falls das zu entgasende Polymer eine relativ kleine Viskosität hat.

Einen teilweisen Querschnitt durch den Polymeraustrittsbereich zeigt die Detaildarstellung in Fig. 3. Über der Lochplatte 23 fliesst die zu behandelnde Flüssigkeit 70 nach deren Schaumbildung. Sie enthält Bläschen 5, 5' mit verschieden grossen Durchmessern. Die grösseren Bläschen 5 bewegen sich durch den Auftrieb rascher nach oben als die kleineren Bläschen 5', die in den tieferen Bereichen länger verweilen. Die aus den Kammeröffnungen 210 austretenden Teilströme 71 der gasarmen Fraktion enthalten sehr kleine Bläschen 5", die durch ein Strecken der film- oder strangförmigen Teilströme 71 so deformiert werden, dass sie sich öffnen und ihren gasförmigen Inhalt in den Mittenbereich 12 abgeben können.

Am Ausgang der unteren Kammeröffnungen 210 kann jeweils ein Leitelement 211 angeordnet sein (siehe Fig. 3), mittels dem der austretende Teilstrom 71 von der Kammerwandung weg gelenkt wird.

Es kann von Vorteil sein, die Löcher 210 des Polymeraustrittsbereichs ungleichmässig zu verteilen, so dass eine variable Löcherdichte vorliegt, beispielsweise eine Abstufung dieser Dichte, bei der die Dichte gegen oben zunimmt. Dadurch lässt sich eine längere Verweilzeit der zu behandelnden Flüssigkeit 7 in der Phasentrennkammer 2 erreichen. Auch im Gasaustrittsbereich kann eine variable Löcherdichte vorgesehen sein. Die Öffnungen 210 des Polymeraustrittsbereichs sowie die Öffnungen 220 des Gasaustrittsbereichs sind jeweils verschieden oder gleich gross, wobei die Öffnungen 210 bzw. 220 verschiedene Formen aufweisen können. Die Löcherdichte, die Löcherdurchmesser und auch die Dicke der Lochplatten kann auf einen vorgesehenen Durchsatz oder Durchsatzbereich des Entgasungsapparats 1 und/oder Viskositätsbereich des Polymers angepasst sein.

Bei der in Fig. 5 gezeigten Variante der Phasentrennkammer 2 bilden drei untere Lochbleche 23a, 23b und 23c (mit den unteren Öffnungen 210) einen Polymeraustrittsbereich, der keilförmig ausgebildet ist. Das Lochblech 23c bildet ein überhängendes Wandstück. Rippen 212 lenken das austretende Polymer von den Lochplatten 23a, 23b und 23c weg. Ein Blechstreifen 23d schliesst die Kammer 2 gegen unten ab und bildet deren tiefst liegenden Stellen. An diesen tiefsten Stellen ist vorzugsweise mindestens eine Öffnung (210') angeordnet, durch welche die Kammer 2 bei einem Betriebsunterbruch leer laufen kann. Nach einer Wiederaufnahme des Betriebs lässt sich der Entgasungsapparat 1 so problemlos wieder anfahren.

Die zu behandelnde Flüssigkeit 7 kann vor Eintritt in die Phasentrennkammer 2 durch Entspannungseinrichtungen, nämlich durch ein Ventil, eine Blende oder einen statischen Mischer, von einem relativ hohen Druck von beispielsweise 3 bar auf den Druck im Innenraum der Phasentrennkammer 2 (beispielsweise 1 bar) entspannt werden.

Fig. 6 zeigt eine Ausführungsform, die eine Variante zum Entgasungsapparat 1 der Fig. 2 ist. Ein Ventil 9 zu einer sprungartigen Entspannung der Flüssigkeit 7 mit einem Ventilkörper 90 ist in den äusseren Teil 2b der Phasentrennkammer 2 integriert. Die genannten Entspannungseinrichtungen können wie im Beispiel der Fig. 6 im Teil 2b der Phasentrennkammer 2 oder auch an einer sonstigen Stelle im Zulauf 20 integriert sein.

Die erfindungsgemässe Polymerentgasung kann auch unter Verwendung eines Strippmittels (z.B. Wasser, Kohlendioxid, Stickstoff) durchgeführt werden. Das Strippmittel wird der zu behandelnden Flüssigkeit 7 vor Eintritt in die Phasentrennkammer 2 beigemischt, wobei dazu vorzugsweise ein statischer Mischer eingesetzt wird. Mit Vorteil wird das Strippmittel bei einem erhöhten Druck mit der zu behandelnden Flüssigkeit 7 vermischt, d.h. also vor einer Entspannungseinrichtungen. Ist die Vermischung ungenügend, so können bei einer Entspannung Schäden durch schlagartig expandierende Blasen entstehen.

## Patentansprüche

1. Verfahren zur Separierung flüchtiger Komponenten von Polymeren einer Polymere enthaltenden Flüssigkeit (7) durch Entspannung der unter Druck stehenden Flüssigkeit (7) in einem statischen Entgasungsapparat (1) mit einem Behälter (10), wobei der Behälter (10) einen Sumpfbereich (13) umfasst, an dessen Boden sich eine Austragspumpe (3) für das entgaste Polymer befindet, wobei der Behälter (10) obere Bereiche (11, 12) umfasst, an welche eine Absaugleitung (4) für ein aus den flüchtigen Komponenten gebildetes Gas (8) angeschlossen ist, wobei mindestens eine Phasentrennkammer (2) zumindest zum Teil in dem Behälter (10) angeordnet ist und diese Phasentrennkammer (2) einen Zulauf (20) für die zu behandelnde Flüssigkeit, untere Öffnungen (210) eines Polymeraustrittsbereichs und eine einzige oder eine Mehrzahl von oberen Öffnungen (220) eines Gasaustrittsbereichs umfasst,
**dadurch gekennzeichnet, dass** der Zulauf (20) außerhalb des Behälters (10) angeordnet und zumindest teilweise als Wärmetauscher (6) ausgebildet ist und, dass ein Ventil (9) entweder in einen außerhalb des Behälters (10) angeordneten Teil (2b) der Phasentrennkammer (2) oder an einer sonstigen Stelle im Zulauf (20) integriert ist und, dass der maximale Druckunterschied bei den tiefst liegenden Öffnungen (210) höchstens 100 mbar beträgt, wenn die Entgasung bei einem tiefen Druck betrieben wird, und der maximale Druckunterschied 500 mbar beträgt, wenn ein hoher Entgasungsdruck vorliegt.

2. Verfahren nach Anspruch 1, **dadurch gekennzeichnet, dass** auf dem Polymeraustrittsbereich rippenartige Leitelemente (211; 212) angebracht sind, mittels derer austretendes Polymer von dem Polymeraustrittsbereich weg gelenkt wird, und dass an den tiefsten Stellen der Phasentrennkammer (2) mindestens eine Öffnung (210') angeordnet ist, durch welche die Kammer leer laufen kann.

3. Verfahren nach Anspruch 1 oder 2, **dadurch gekennzeichnet, dass** in der Phasentrennkammer (2) eine Entgasung durch Freisetzen von flüchtigen Komponenten aufgrund einer Schaumbildung durchgeführt wird und dass dabei eine gasreiche und eine gasarme Fraktion erzeugt werden, die durch den Gasaustrittsbereich bzw. den Polymeraustrittsbereich aus der Kammer austreten.

4. Verfahren nach einem der Ansprüche 1 bis 3, **dadurch gekennzeichnet, dass** die mittlere Verweilzeit der zu behandelnden Flüssigkeit in der Phasentrennkammer (2) mindestens eine Minute, vorzugsweise zwei Minuten beträgt.

5. Verfahren nach einem der Ansprüche 1 bis 4, **dadurch gekennzeichnet, dass** die unteren Öffnungen (210) so groß ausgebildet sind, dass beim maximalen Druckunterschied die gasarme Fraktion durch die einzelnen Öffnungen mit höchstens 15 kg/h abgelassen wird.

6. Verfahren nach einem der Ansprüche 1 bis 5, **dadurch gekennzeichnet, dass** der zu behandelnden Flüssigkeit (7) vor dem Eintritt in die Phasentrennkammer (2) ein Strippmittel beigemischt wird, das vorzugsweise mittels eines statischen Mischers eingemischt wird.

7. Verfahren nach einem der Ansprüche 1 bis 6, **dadurch gekennzeichnet, dass** die zu behandelnde Flüssigkeit (7) vor Eintritt in die Phasentrennkammer (2) bei einem Durchfließen eines Wärmetauschers (6) erhitzt wird.

8. Verfahren nach einem der Ansprüche 1 bis 7, **dadurch gekennzeichnet, dass** die zu behandelnde Flüssigkeit vor Eintritt in die Phasentrennkammer (2) durch ein Ventil (9), eine Blende oder einen statischen Mischer von einem relativ hohen Druck auf den Innendruck der Phasentrennkammer entspannt wird, wobei mit Vorteil eine Einrichtung zu dieser Entspannung in den Zulauf (20) der Phasentrennkammer integriert ist.

9. Statischer Entgasungsapparat (1) für eine Polymere enthaltende Flüssigkeit (7) zur Separierung flüchtiger Komponenten von den Polymeren durch Entspannung der unter Druck stehenden Flüssigkeit in einem Behälter (10), wobei der Behälter (10) einen Sumpfbereich (13) umfasst, an dessen Boden sich eine Austragspumpe (3) für das entgaste Polymer befindet, wobei der Behälter (10) obere Bereiche (11, 12) umfasst, an welche eine Absaugleitung (4) für ein aus den flüchtigen Komponenten gebildetes Gas (8) angeschlossen ist, wobei mindestens eine Phasentrennkammer (2) zumindest zum Teil in dem Behälter (10) angeordnet ist und diese Phasentrennkammer (2) einen Zulauf (20) für die zu behandelnde Flüssigkeit und untere Öffnungen (210) eines Polymeraustrittsbereichs umfasst,
**dadurch gekennzeichnet, dass**
die Phasentrennkammer (2) auch eine einzige oder eine Mehrzahl von oberen Öffnungen (220) eines Gasaustrittsbereichs umfasst, der Zulauf (20) außerhalb des Behälters (10) angeordnet und zumindest teilweise als Wärmetauscher (6) ausgebildet ist und dass ein Ventil (9) entweder in einen außerhalb des Behälters (10) angeordneten Teil (2b) der Phasentrennkammer (2) oder an einer sonstigen Stelle im Zulauf (20) integriert ist.

## Claims

1. Method for separating volatile components of polymers of a polymer containing liquid (7) by releasing the liquid (7) being under pressure in a static devolatilization apparatus (1) with a vessel (10), wherein the vessel (10) comprises a sump area (13) at the bottom of which a discharge pump (3) for the devolatilized polymer is arranged, wherein the vessel (10) comprises upper areas (11, 12), to which a suction pump (4) for the gas (8) formed from the volatilized components is connected, wherein at least one phase separation chamber (2) is arranged at least partially in the vessel (10) and wherein the phase separation chamber (2) comprises a feed (20) for the liquid to be treated, lower openings (210) of a polymer discharge area and a single one or a plurality of upper openings (220) of a gas outlet area, **characterized in that** the feed (20) is arranged outside of the vessel (10) and is at least partially embodied as a heat exchanger (6), and that a valve (9) is integrated either in a part (2b) of the phase separation chamber (2) being arranged outside of the vessel (10) or at another location in the feed (20), and that
the maximum pressure difference of the lowest arranged openings (210) amounts to at most 100 mbar, when the devolatilization is performed at a low pressure generated by the vacuum pump, and the maximum pressure difference amounts to 500 mbar, when a high devolatilization pressure exists.

2. Method in accordance with claim 1, **characterized in that** on the polymer discharge area rip-like guide elements (211; 212) are arranged, with which the discharging polymer is guided away from the polymer discharge area, and **in that** at the lowest locations of the phase separation chamber (2) at least one opening (210') is arranged, through which the chamber may get emptied.

3. Method in accordance with claim 1 or 2, **characterized in that** in the phase separation chamber (2) a devolatilization by releasing of volatile components due to the foam formation is carried out, and **in that** thereby a gas-rich and a gas-poor fraction are generated, which exit the chamber through the gas discharge area and the polymer discharge area, respectively.

4. Method in accordance with claim 1 or 3, **characterized in that** the average residence time of the liquid to be treated in the phase separation chamber (2) amounts to at least one minute, preferable two minutes.

5. Method in accordance with any of claims 1, 3 or 4, **characterized in that** the lower openings (210) are formed so large that at a maximum pressure difference the gas-poor fraction is discharged through the single openings with at most 15 kg/h.

6. Method in accordance with any of claims 1 or 3 to 5, **characterized in that** the liquid (7) to be treated is mixed before the entry into the phase separation chamber (2) with a stripping agent, which is preferably mixed by means of a static mixer.

7. Method in accordance with any of claims 1 or 3 to 6, **characterized in that** the liquid to be treated (7) is heated in the phase separation chamber (2) during the flow through a heat exchanger (6).

8. Method in accordance with any of claims 1 or 3 to 7, **characterized in that** the liquid to be treated is released before the entry into the phase separation chamber (2) by means of a valve (9), by means of a blind or by means of a static mixer from the relatively high pressure to the inner pressure of the phase separation chamber, wherein preferably for this releasement a device is integrated in the feed (20) to the phase separation chamber.

9. A static devolatilization apparatus (1) for a polymers containing liquid (7) for separating volatile components of the polymers by releasing the liquid being under pressure in a vessel (10), wherein the vessel (10) comprises a sump area (13) with a discharge pump (3) for the devolatilized polymer being arranged at its bottom, wherein the vessel (10) comprises upper areas (11, 12), to which a suction pump (4) for the gas (8) formed from the volatilized components is connected, wherein at least one phase separation chamber (2) is arranged at least partially in the vessel (10) and wherein the phase separation chamber (2) comprises a feed (20) for the liquid to be treated and lower openings (210) of a polymer discharge area **characterized in that** the phase separation chamber (2) also comprises a single one or a plurality of upper openings (220) of a gas outlet area, the feed (20) is arranged outside of the vessel (10) and is at least partially embodied as a heat exchanger (6), and a valve (9) is integrated either in a part (2b) of the phase separation chamber (2) being arranged outside of the vessel (10) or at another location in the feed (20).

## Revendications

1. Procédé de séparation de composantes volatiles de polymères d'un liquide (7) contant des polymères par détente du liquide sous pression (7) dans un appareil de dégazage statique (1) pourvu d'un récipient (10), le récipient (10) comprenant une zone formant puisard (13) au fond de laquelle se trouve une pompe d'évacuation (3) pour le polymère dégazé, dans lequel
le récipient (10) comprend des zones supérieures (11, 12) auxquelles est raccordée une conduite d'aspiration (4) pour un gaz (8) formé par les composantes volatiles,
au moins une chambre de séparation de phases (2) est agencée au moins en partie dans le récipient (10), et cette chambre de séparation de phases (2) comprend une admission (20) pour le liquide à traiter, des ouvertures inférieures (210) d'une zone de sortie de polymère et une seule ou une pluralité d'ouvertures supérieures (220) d'une zone de sortie de gaz,
**caractérisé en ce que** l'admission (20) est disposée à l'extérieur du récipient (10) et est formée au moins en partie comme une échangeur de chaleur (6), et que une vanne (9) est intégré soit dans une partie (2b) de chambre de séparation de phases (2) qui est disposé à l'extérieur du récipient (10) ou dans un autre lieu dans l'admission (20), et que
la différence de pression maximale est au maximum de 100 mbar au niveau des ouvertures (210) les plus basses, lorsque le dégazage fonctionne à une pression basse générée par une pompe à vide, et la différence de pression maximale est de 500 mbar lorsqu'il se présente une pression de dégazage élevée.

2. Procédé selon la revendication 1,
**caractérisé en ce que**
des éléments de guidage (211 ; 212) en forme de nervures sont montés sur la zone de sortie de polymère, au moyen desquels le polymère sortant est dévié en éloignement de la zone de sortie de polymère, et **en ce que**
aux emplacements les plus bas de la chambre de séparation de phases (2), il est prévu au moins une ouverture (210') permettant à la chambre de se vider.

3. Procédé selon la revendication 1 ou 2,
**caractérisé en ce que**
un dégazage par dégagement de composantes volatiles dû à la formation de mousse est effectué dans la chambre de séparation de phases (2), et **en ce que**
une fraction riche en gaz et une fraction pauvre en gaz sont ainsi produites qui sortent hors de la chambre par la zone de sortie de gaz ou par la zone de sortie de polymère.

4. Procédé selon l'une des revendications 1 ou 3,
**caractérisé en ce que**
le temps de séjour moyen du liquide à traiter dans la chambre de séparation de phases (2) est d'au moins une minute, de préférence de deux minutes.

5. Procédé selon l'une des revendications 1, 3 ou 4,
**caractérisé en ce que**
les ouvertures inférieures (210) sont réalisées si grandes que lors de la différence de pression maximale la fraction pauvre en gaz est évacuée avec au maximum 15 kg/h à travers les ouvertures individuelles.

6. Procédé selon l'une des revendications 1 ou 3 à 5,
**caractérisé en ce que**
un agent de stripage est ajouté au liquide à traiter (7) avant d'entrer dans la chambre de séparation de phases (2), ledit agent étant ajouté de préférence à l'aide d'un mélangeur statique.

7. Procédé selon l'une des revendications 1 ou 3 à 6,
**caractérisé en ce que**
avant d'entrer dans la chambre de séparation de phases (2), le liquide à traiter (7) est chauffé pendant son écoulement à travers un échangeur de chaleur (6).

8. Procédé selon l'une des revendications 1 ou 3 à 7,
**caractérisé en ce que**
avant d'entrer dans la chambre de séparation de phases (2), le liquide à traiter est détendu pour passer d'une pression relativement élevée à la pression intérieure de la chambre de séparation de phases par une vanne (9), par un diaphragme ou par un mélangeur statique, et avantageusement un moyen destiné à cette détente est intégré dans l'admission (20) de la chambre de séparation de phases.

9. Appareil de dégazage statique (1) pour un liquide (7) contant des polymères pour séparation de composantes volatiles de polymères par détente du liquide sous pression (7) dans un récipient (10), le récipient (10) comprenant une zone formant puisard (13) au fond de laquelle se trouve une pompe d'évacuation (3) pour le polymère dégazé, dans lequel le récipient (10) comprend des zones supérieures (11, 12) auxquelles est raccordée une conduite d'aspiration (4) pour un gaz (8) formé par les composantes volatiles, au moins une chambre de séparation de phases (2) est agencée au moins en partie dans le récipient (10), et cette chambre de séparation de phases (2) comprend une admission (20) pour le liquide à traiter et des ouvertures inférieures (210) d'une zone de sortie de polymère, **caractérisé en ce que**
cette chambre de séparation de phases (2) comprend une seule ou une pluralité d'ouvertures supérieures (220) d'une zone de sortie de gaz, l'admission (20) est disposée à l'extérieur du récipient (10) et est formée au moins en partie comme une échangeur de chaleur (6), et que une vanne (9) est intégré soit dans une partie (2b) de chambre de séparation de phases (2) qui est disposé à l'extérieur du récipient (10) ou dans un autre lieu dans l'admission (20).
